# EUROPEAN PATENT APPLICATION

(11) **EP 1 450 467 A1**
(43) Date of publication of application: **25.08.2004**
(21) Application number: 03425101.7
(22) Date of filing: 21.02.2003
(51) Int. Cl.: H02K 7/10, H02K 21/22

(54) **Synchronous electric motor with a pulley and method for manufacturing the motor**

(71) Applicant: Askoll Holding S.r.l., 36031 Povolaro di Dueville (Vicenza) (IT)
(72) Inventor: Marioni, Elio, 36031 Dueville (Vicenza) (IT)
(74) Representative: Botti, Mario

(57) **Abstract**

The invention relates to a synchronous electric motor (3), particularly for washing machines (1) and similar household appliances with rotably drum (2) being kinematically connected with the motor (3) by a belt and pulley link (6), of the type comprising:
a central stator (5) fixedly mounted on an axis (7);
an external rotor (4) having permanent magnets (13),rotably supported and overhanging on the motor shaft (7) and having at least one bearing (15) interposed;
a pulley (12,12a,12b) rotably rigid with the rotor (4).

Advantageously, the rotor (4) has an essentially cylindrical cup shape with an end wall provided with a hub (20) receiving the bearing (15); the pulley (12,12a,12b) being rigidly inserted on the hub (20,20a) and being rotably with the hub (20, 20a).

## Description

### Field of Application

The present invention broadly relates to a synchronous electric motor particularly for, but not limited to, washing machines and similar household appliances with rotably drum, whose drum is kinematically connected to the motor by means of a belt and pulley link.

More particularly, the invention relates to a synchronous electric motor as above, which comprises:
a central stator fixedly mounted on an axis;
a permanent-magnet rotor that is external with respect to the stator and is rotably supported and overhanging on said axis with at least one bearing interposed.

The invention further relates to a method for manufacturing a motor as above.

### Prior Art

As the skilled in the art well know, household washing machines are provided with a washing tub wherein a rotably drum is activated, having cylindrical shape and being accessible through a door provided for loading it with laundry. The drum is rotatively driven by an electric motor.

Washing machine manufacturers usually offer a range of patterns which differ from one another according to their washing performance and, in particular, to their laundry capacity.

The possibility to use the same electric motor to be mounted on all washing machines of its offer range would be of great value to the manufacturer.

In order to meet this demand, prior art solutions provide very expensive permanent-magnet synchronous motors coaxially mounted to the washing drum, known in the field as "Direct Drive". An example of this solution is described in US Patent 6,341,507 to Miele.

These motors mounted have an advantage in that they do not require any belt and pulley kinematical link; however the use of motors coaxially mounted on the drum shaft need the solution of lots of space problems that move on the drum structure the problem of how keeping fix the washing machine depth when loads are heavier.

In addition, driving problems arise because the constant magnetic excitation flux, which is constant because of the permanent magnets, requires the stator coils to absorbe more current so as to properly regulate speed changes and reversals of motor direction. Multiple stator poles must be provided in order to limit current on the individual coils and prevent demagnetization.

This prior art solution and other ones are extremely expensive and imply the use of synchronous motors of very small thickness for washing machines intended for the high level of the market.

Alternatively, vector control motors could be used, whose driving versatility enables them to activate in rotation also quite heavy loads through the conventional belt and pulley kinematical link.

However, also this kind of motor is expensive, and thus unprofitable to be mounted on middle-market washing appliances.

Usually, the rotably drum is rotatively activated by universal manifold electric motors having an external stator and a slot-winded central rotor, the rotor being made rigid with a rotation shaft integral with a pulley. The drum is kinematically connected with the pulley by means of a second pulley and a transmission belt.

Even if these motors are currently employed in a majority of washing machines, they are not fully satisfactory by reason of their noisy operation, due to brush commutation on the manifold, which is objectionable since these machines are commonly installed at home, in rooms such as kitchen or bathroom.

In addition, universal motors do not reach high washing performance and have a relatively high power consumption contrary to today's concern for energy saving.

Other shortcomings are due to high rotation speed which implies high transmission ratios.

The underlying technical problem of this invention is to provide an external-rotor, synchronous electric motor structure for washing machines and similar household appliances, having such structural and functional characteristics as to obtain a higher starting torque, great toughness and reliability, as well as employ versatility on machines being distinguishable because of their different load capacity, all this with extremely moderate manufacturing costs.

Such a motor should also guarantee a significant operating quietness at all speeds.

### Summary of the Invention

The solution idea on which the present invention stands is that of exploiting the typical quietness of permanent-magnet synchronous motors in a motor having an external rotor, one of whose ends is made integral with the pulley of the kinematism connecting it with the rotably drum, this pulley being a sort of external extension of the rotor structure.

On the basis of the solution idea, the technical problem is solved according to the present invention by a motor as previously described and characterized in that it comprises a pulley being rotatively rigid with the rotor. Advantageously, moreover, the rotor has an essentially cylindrical cup shape, with an end wall equipped with a hub receiving said bearing, said hub being inserted in said pulley and being rotatively rigid with it.

The invention further relates to a method for manufacturing an electric motor having external rotor and internal stator, as defined in Claim 10 foll.

The features and advantages of the motor and of the manufacturing method of this invention should become apparent from the following description of an embodiment thereof, given with reference to the accompanying indicative and non-limitative drawings.

### Brief Description of the Drawings

In the drawings:
Figure 1 schematically shows a washing machine having an external-rotor synchronous electric motor according to the invention;
Figure 1A schematically shows a washing machine having an external-rotor synchronous electric motor according to a modified embodiment of the invention;

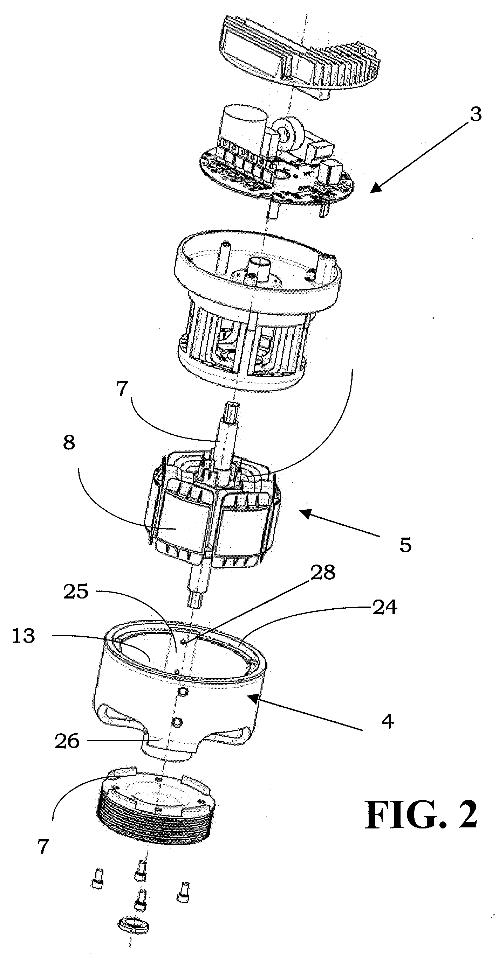

Figure 2 is an exploded perspective view of the electric motor according to the invention;

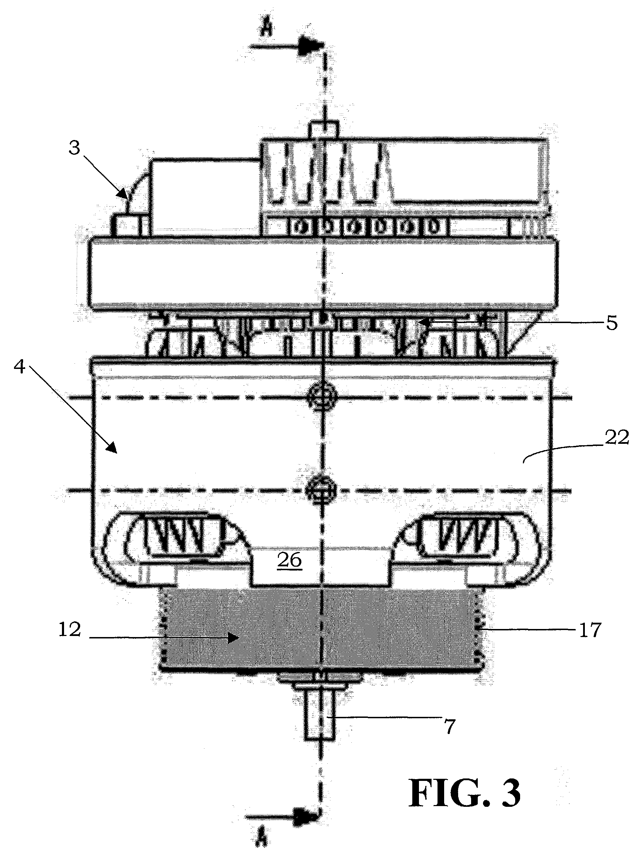

Figure 3 is a schematic front view of an external-rotor synchronous electric motor according to the invention;

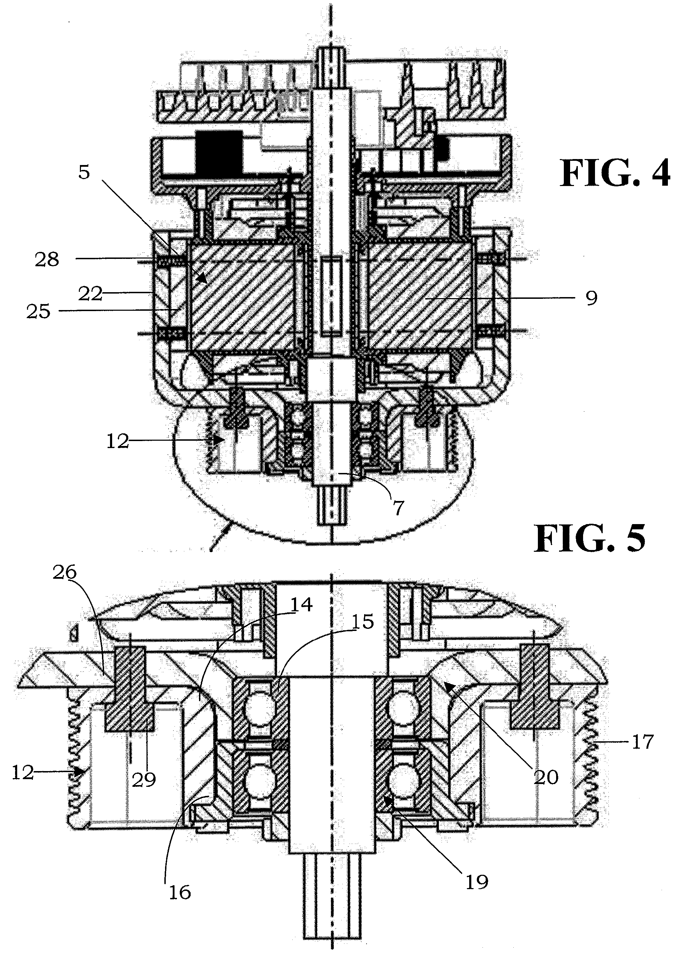

Figure 4 is a longitudinal section view, taken along section line A-A, of the motor shown in Figure 3;
Figures 5 is an enlarged view of a detail the motor shown in Figure 4;
Figure 6 is a schematic front view of an external-rotor synchronous electric motor according to the embodiment shown in Figure 1A;
Figure 7 is a longitudinal section view, taken along section line A-A, of the motor shown in Figure 6;
Figure 8 is a longitudinal section view of a detail of the motor according to the invention seen in a second modified embodiment;
Figure 9 is an exploded perspective view of the detail shown in Figure 8;
Figures 10 and 11 are schematic longitudinal section views of further modifications of the detail shown in Figure 8;
Figure 12 is an exploded perspective view of the motor of this invention according to the modified embodiments shown in Figures 10 and 11.

### Detailed Description

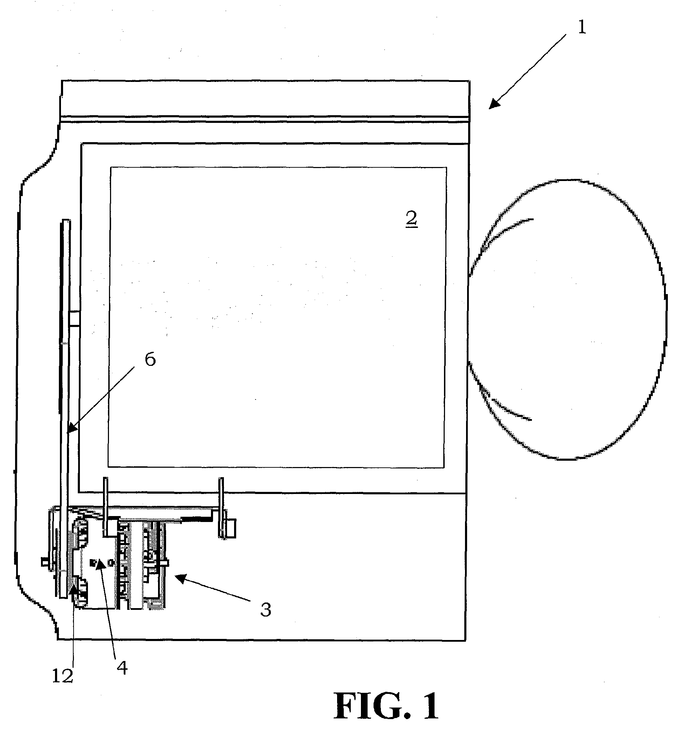

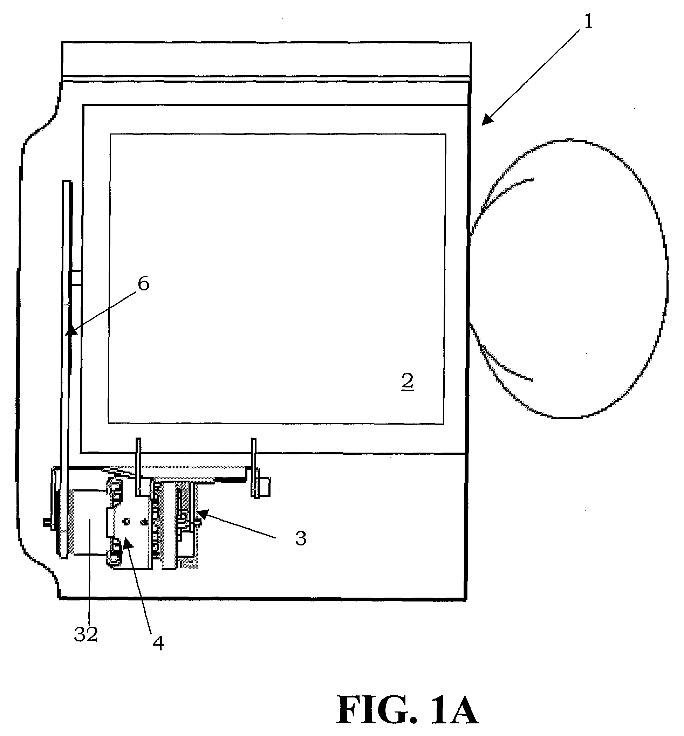

With reference to Figures 1 and 1A, 1 schematically shows a washing machine with rotably drum 2, the washing machine using a synchronous electric motor 3 according to the invention. This electric motor is of the so-called external rotor type, i.e. of the type wherein a rotor 4 is mounted outside the relevant stator 5.

Furthermore, the rotor 4 is a permanent-magnet rotor.

The motor 3, in a conventional way, is kinematically connected with the rotably drum 2 of the washing machine 1 through a belt and pulley link 6, as shown in Figure 1. The transmission ratio is preferably selected in the range between 1:4 and 1:5.

The internal stator 5 generally has a cylindrical configuration which is crossed by an axial bore that is substantially cynlindrical and of predetermined diameter. An axis 7, fixedly carrying the whole electric motor, engages the axial bore.

The stator 5 has a plurality of pole shoes 8, each conventionally defined by a corresponding plurality of identical laminations 9 being stacked in a package and being in mutual contact each other. The laminations 9 are each substantially T-shaped and radially extended in said cylindrical stator 5 configuration with a circular arc-shaped outer end and the opposite end, or base, in the shape of an isosceles trapezoid. The bases of laminations face the axial bore and have sloping sides which radially extend out from the bore.

Each package of laminations 9 constitutes a cylindrical sector having curvilinear external wall being coaxial and concentrical with respect to the axial bore, and a radially extended web. The external walls of the cylindrical sectors are the corresponding pole shoes 8 of the stator 5, whereas the stator coils are conventionally wound around respective spools fitted over the radial webs.

Advantageously in this invention, the permanent-magnet external rotor 4 is mounted on the stator 5 structure with prefixed clearance.

The rotor 4 comprises an essentially cylindrical casing 22 and a predetermined number of magnetic poles 13 associated with the inner wall 24 of the casing 22.

The permanent-magnet rotor 4 has a predetermined number of magnetic poles 13, these poles are four in the non-limitative example which is here described. The stator 5 has a number of poles shoes 8 that is different from the magnetic poles 13 of the rotor, in particular six pole shoes.

The magnetic poles 13 of the rotor 4 are plate-like annular sectors being circumferentially spaced from one another of a predetermined width. However, there is no reason why the poles could not be of unequal width or differently spaced.

In a preferred embodiment, each one of said spaces 21 is occupied by a corresponding insert 25 wedgely inserted between the relevant contiguous magnetic poles 13 to act on them in a keystone-like way.

Means 28 are provided for blocking the inserts 25 in place, against the inner wall 24 of the rotor 4.

Advantageously in this invention, the rotor 4 is rotably supported and overhanging on the axis 7 with at least one bearing 15 interposed.

A pulley 12 is rotatively integral with the rotor 4.

In particular, the rotor 4 has a substantially cylindrical cup shape, obtained for instance by drawing, with an end wall 26 of the casing 22 having a hub 20 to receive said bearing 15.

The axis 7 obviously extends through the hub 20 with the bearing 15 interposed.

The hub 20 is inserted in said pulley 12 and it is rotatively integral with it.

In particular the hub 20 is engaged in an end portion 14 of said pulley 12. The other end 16 of the pulley 12 is rotably mounted on said axis 7 with a second, relevant bearing 19 interposed.

The bearing 19 is completely independent from the first bearing 15 even if they are close together.

The pulley 12 is provided with grooves 17 along its length.

In a preferred embodiment, the pulley 12 is made of a thermoplastic material and attached to the end wall 26 of the rotor 4 by means of fixing screws 29. Other alternative fixing means can be obviously used for the purpose.

The above construction of the rotor 4 is advantageous in that, in the transmission kinematism between motor 3 and drum 2, the loads is delivered directly by the bearings 15 and 19, which, in a proportional way, can have smaller dimensions with respect to traditional motors, thus better supporting the effort.

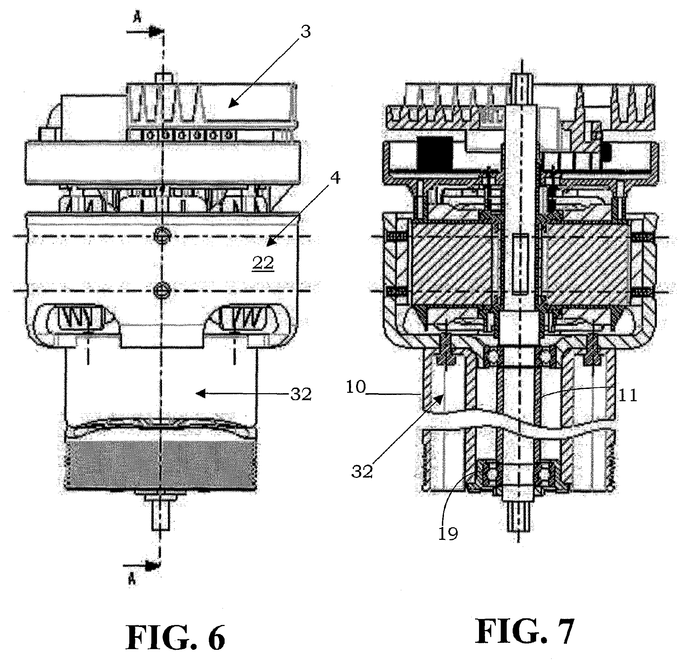

With particular reference to the embodiment of Figures 6 and 7, a modified embodiment will now be described, where elements and cooperating parts that are similar to those previously described are denoted by the same reference numerals.

In this second embodiment, an end section of a pulley 32, that is higher than that of the above described pulley 12, is engaged on the hub 20 of the rotor 4.

The pulley 32 has at least a section provided with a predetermined number of grooves 17, while the remaining section 10 is essentially smooth.

The pulley 32 is suitable for use with deep washing drums, e.g. drums having a laundry capacity higher than six kilograms.

In these cases, the structure of the motor 3 is almost unaltered, but the higher pulley 32 allows to connect the motor to the transmission kinematism 6 even in appliances that have the supporting points of the motor 3 differently located, as shown in Figure 1A.

Obviously, in this case, the bearing 19 is no more adjacent to the bearing 15 but prefixedly spaced from it. This is achieved by means of a spacer 11 as shown best in Figure 7.

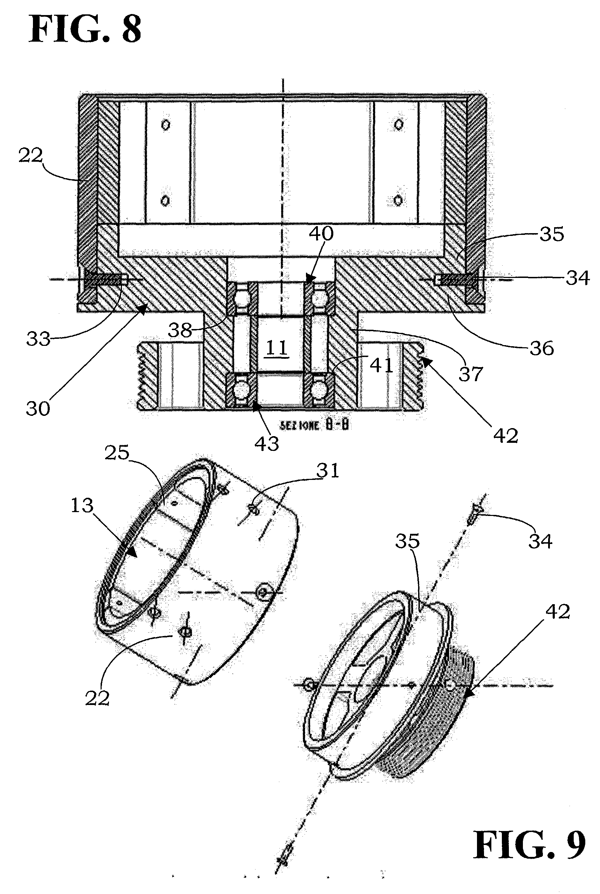

Figure 8 shows a second modified embodiment with a cylindrical cup element 30 having an end wall 36 and a sidewall 35 fitted inside at one end of the cylindrical casing 22 of the rotor 4.

Fixing screws 34 are engaged in threaded seats 33, which are located in the sidewall 35 and are diametrically opposite to each other, and through holes 31 crossing the casing 22.

Advantageously, a sleeve 37 is integral with the end wall 36 and projects outwards from the rotor 4 perpendicularly to the wall 36. The sleeve 37 essentially corresponds with the hub 20.

Seats 38, 41 for receiving respective bearings 40, 43 are provided inside the sleeve 37, the bearings being held in parallel relationship with each other and being prefixedly spaced by a spacer 11.

In the example of Figure 8, the pulley 42 is integral with one end of the hub 37. Alternatively, the free end of the sleeve 37 could be annularly undercut to receive a structurally independent pulley that is removably mounted onto the sleeve.

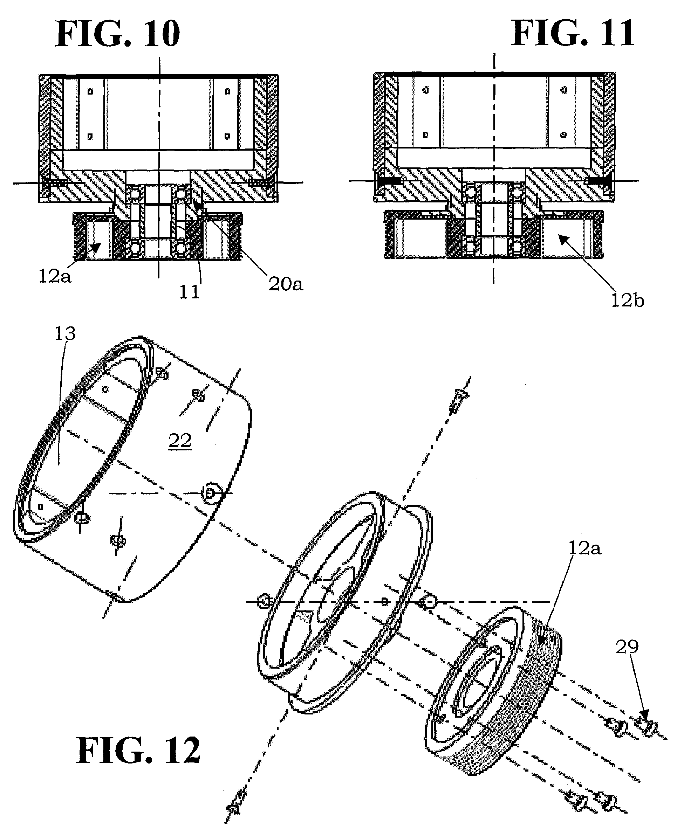

More particularly, a short sleeve 20a functioning as a hub is integral with the end wall 36 of a cylindrical cup element associated with the casing 22 of the rotor 4, as it is well shown by way of mere example in Figures 10 and 11.

A pulley 12a is removably mounted on this hub 20a by using screws 29 shown in Figure 12.

Also in this second embodiment the pulley 12a is rotatively rigid with the rotor 4 and the sleeve/hub 20a.

Advantageously, a pulley 12b of a higher diameter as well as a pulley of different height could be used to meet the motion transmission requirements of the kinematism 6.

Figure 11 shows, as an example, a pulley 12b essentially having the same diameter as the cylindrical casing 22 of the rotor 4.

A method for industrially manufacturing a synchronous electric motor 3 having a permanent-magnet external rotor 4 as above will now be briefly described.

For manufacturing such a rotor 4 these are the following successive steps:
providing a casing 22 of essentially cylindrical shape, having an end wall 26 centrally provided with a hub 20, 20a or a sleeve 37;
providing at least one bearing 15, 38 between the hub 20 or the sleeve 37 and the motor-supporting axis 7;
attaching a pulley 12, 12a, 42 of the motion transmission kinematism between motor and drum to said hub 20, 20a or sleeve 37.

As previously mentioned, the pulley 12 can be provided with its own bearing 19, 43, which is interposed between the pulley and the axis 7 supporting the motor 3.

In the modification of Figure 8, wherein the sleeve 37 is integral with the pulley, the sleeve receives both bearings 40 and 43.

An important advantage of the rotor structure of this invention is the robust construction due to the perfect balance of its components and to their strong interconnections.

Additional advantages include long operating life expectation achieved through an overall construction that makes the motor of this invention especially powerful and capable of accepting high transmission ratios with high starting torque and, on average, lower speed than in prior art solutions.

In addition, the rotor of this invention can be quickly assembled and does not need any specialized labour.

Many changes and alterations may be made to the invention as described hereinabove, all within the reach of the skilled in the art and, as such, falling within the protection range of the present invention defined in the following claims.

## Claims

1. Synchronous electric motor (3), particularly for washing machines (1) and similar household appliances with rotably drum (2) being kinematically connected to the motor (3) by a belt and pulley link (6), of the type comprising:
a central stator (5) fixedly mounted on an axis (7);
a rotor (4) having permanent magnets (13), being outside the stator (5) and rotably supported and overhanging on said axis (7) with at least one bearing (15) interposed; **characterized in that** it comprises:
a pulley (12,12a,12b) rotably rigid with the rotor (4); and that
said rotor (4) has an essentially cylindrical cup shape with an end wall (26,36) provided with a hub (20,20a) receiving said bearing (15), on said hub (20) being inserted a pulley (12,12a,12b) rotably integral with it.

2. Motor according to Claim 1, **characterized in that** said hub (20,20a) is engaged in an end section (14) of said pulley (12,12a).

3. Motor according to Claim 2, **characterized in that** the other end (16) of said pulley (12) is rotably mounted on said axis (7) with a interposed relevant bearing (19).

4. Motor according to Claim 1, **characterized in that** at least a section of said pulley (12) has a predetermined number of grooves (17).

5. Motor according to Claim 1, **characterized in that** said pulley has grooves (17) throughout its length.

6. Motor according to Claim 1, **characterized in that** said pulley (12) is attached to said end wall (26) by using fixing means (29).

7. Motor according to Claim 1, **characterized in that** said hub is a sleeve (37) being integral with said end wall (36) to receive inside a pair of bearings (40,43); the pulley (42) being integral with one end of said sleeve.

8. Motor according to Claim 7, **characterized in that** said pulley (12a) is removably integral with the free end of said hub (20a).

9. Motor according to Claim 1, **characterized in that** the diameter of said pulley is essentially equal to the diameter of the rotor (4).

10. Method for manufacturing a synchronous electric motor (3) having a central stator (5) and a permanent-magnet external rotor (4) according to the previous claims, comprising the steps of:
a. providing a casing (22) of essentially cylindrical shape, having an end wall (26) centrally provided with a hub (20,20a) or an outward projecting sleeve (37);
b. providing at least one bearing (15,38) between the hub (20,20a) or sleeve (37) and the motor-supporting axis (7);
c. attaching a pulley (12,12a,42) of the motion transmission kinematism (6) between motor and drum to said hub (20,20a) or sleeve (37).

11. Method according to Claim 10, **characterized in that** said pulley is also attached to said end wall (26) by fixing means (29).

12. Method according to Claim 10, **characterized in that** the end wall (36) is removably attached to said cylindrical casing (22).

13. Method according to Claim 10, **characterized in that** the pulley (12,12a,12b) is rotably mounted on said axis (7) with a interposed relevant bearing (19,43).

14. Method according to Claim 10, **characterized in that** said pulley (12a) is removably integral with the free end of said hub (20a).

15. Method according to Claim 10, **characterized in that** said pulley (42) is integral with one end of the sleeve (37).
